# EUROPÄISCHE PATENTANMELDUNG

(11) **EP 0 654 619 A1**
(43) Veröffentlichungstag der Anmeldung: **24.05.1995**
(21) Anmeldenummer: 94108758.7
(22) Anmeldetag: 08.06.1994
(51) Int. Cl.: F16F 15/03

(54) **Lagerung für schwingendes Bauteil**

(30) Priorität: 24.11.1993 DE 4339988
(71) Anmelder: Firma Carl Freudenberg, D-69469 Weinheim (DE)
(72) Erfinder: Feurer, Georg, D-69509 Mörlenbach (DE); Leibach, Markus, D-69502 Hemsbach (DE)

(57) **Zusammenfassung**

Lagerung für ein schwingendes Bauteil, umfassend ein auf einem Maschinenteil (3) abgestütztes Auflager (2), ein durch einen Federkörper auf dem Auflager (2) abgestütztes Traglager und eine durch einen Antrieb parallel zur Richtung der betriebsbedingt eingeleiteten Schwingungen hin- und herbewegbare Trägheitsmasse (7), die federnd gelagert und, bezogen auf die erregende Schwingung, gegensinnig bewegbar ist, wobei die Trägheitsmasse (7) durch eine Feder (5) mit dem Auflager (2) verbunden ist, wobei die Trägheitsmasse (7) und die Feder (5) nicht durch eine Flüssigkeit berührt sind.

## Beschreibung

Die Erfindung betrifft eine Lagerung für ein schwingendes Bauteil, umfassend ein auf einem Maschinenteil abgestütztes Auflager, ein durch einen Federkörper auf dem Auflager abgestütztes Traglager und eine durch einen Antrieb parallel zur Richtung der betriebsbedingt eingeleiteten Schwingungen hin- und herbewegbaren Trägheitsmasse, die federnd gelagert und, bezogen auf die erregende Schwingung, gegensinnig bewegbar ist, wobei die Trägheitsmasse durch eine Feder mit dem Auflager verbunden ist.

Eine Lagerung der vorgenannten Art ist aus der DE-OS 34 23 698 bekannt. Es wird ein Schwingungsdämpfendes Lager angegeben für einen schwingenden Körper mit einem Lagerkern und einem Widerlager, zwischen denen ein Federelement und ein flüssigkeitsgefüllter Arbeitsraum einer hydraulischen Dämpfungseinrichtung angeordnet sind. Weiterhin weist das Lager eine mit einem Stellglied versehene Kompensationswand auf, die mindestens 10 % der Begrenzungsfläche des Arbeitsraumes überdeckt. Das Lager ist mit einer Steuereinheit, die ein Prozessrechner umfaßt verbunden, der ein mit einem Signalgeber erfaßtes Führungssignal des schwingenden Körpers, dem sich die Störschwingungen in repräsentativer Weise zuordnen lassen, sowie mindestens ein weiteres, den Zustand des Körpers kennzeichnendes Signal aufnimmt und der die Steuersignale an das Stellglied abgibt verbunden. Dies dient dazu um eine Kompensation der durch die Störschwingungen verursachten Druckänderung der Flüssigkeit zu bewirken. Die dabei zur Anwendung gelangende Steuereinheit bewirkt eine starre Ankopplung der Bewegungen der Kompensationswand an die jenigen der Kurbelwelle. Das ist unter praktischen Gesichtspunkten wenig befriedigend. Auf eine andere Vorrichtung nimmt die DE-PS 34 33 255 bezug. Diese Vorrichtung betrifft ein hydraulisch gedämpftes Gummilager zur Abstützung eines in einer schwingenden Bewegung befindlichen Maschinenaggregats auf einem Träger, bei dem einem flüssigkeitsgefüllten Arbeitsraum mit ein mit einem elektromagnetischen Antrieb versehener Aktuator zugeordnet ist, wobei der Antrieb mit einer Kennfeldsteuerung versehen ist, die mit einem Signalgeber des Maschinenaggregats verbunden ist und einen Leistungsverstärker als Endstufe umfaßt. Dabei ist es vorgesehen, den Aktuator in der Weise gesteuert zu betätigen, daß die beiden vorher festgelegten Betriebszuständen von dem Maschinenaggregat verursachten Störschwingungen in ihrer Gesamtheit optimal kompensiert werden. Zur Erreichung dieses Zweckes wird der Aktuator mit Hilfe eines Kennfeldes angesteuert, in dem empirisch ermittelte. Reaktionen in Abhängigkeit von einer den jeweiligen Betriebszustand charakterisierend beschreibenden Zustandsgröße des Maschinenaggregats abgespeichert sind. Ein solche Zustandsgröße bildet beispielsweise die Drehzahl. Im Kfz-Bereich lassen sich hierdurch Schwingungen in optimaler Weise isolieren, die bei einer bestimmten Drehzahl und bestimmen Lastzuständen verursacht werden. Das sich während des praktischen Fahrbetriebes ergebende Spektrum von möglichen und tatsächlich auftretenden Störschwingungen wird hierdurch jedoch nur unzureichend abgedeckt. Auch ist die Ermittlung der Steuerdaten sehr aufwendig.

Der Erfindung liegt die Aufgabe zugrunde, eine Lagerung der eingangs genannten Art derart weiterzuentwickeln, daß die auftretenden Störschwingungen in ihrer Gesamtheit optimal kompensierbar sind.

Diese Aufgabe wird erfindungsgemäß bei einer Lagerung für ein schwingendes Bauteil der eingangs genannten Art mit den kennzeichnenden Merkmalen von Anspruch 1 gelöst. Auf vorteilhafte Ausgestaltung nehmen die Unteransprüche Bezug.

Die erfindungsgemäße Lagerung ist dadurch charakterisiert, daß die Trägheitsmasse und die Feder nicht durch eine Flüssigkeit berührt sind. Bei Einsatz der erfindungsgemäßen Lagerung, d.h. das Auflager gekoppelt mit einem ansteuerbaren Schwingungstilger zur Störschwingungskompensation kann auf ein kompliziert aufgebautes Hydrolager verzichtet werden und die Lagerung ist für jedes schwingendes Bauteil einsetzbar. Ein schwingendes Bauteil kann nicht nur der Motor, sondern auch ein Getriebe, ein Klimakompressor, eine Lichtmaschine oder auch Baugruppen, wie beispielsweise die Räder eines Fahrzeuges sein. Der Schwingungstilger kann nicht nur an einer bestimmten Stelle angebracht werden, sondern er kann z.B. am Hilfsrahmen am Längsträger am Motor oder an jeder beliebigen Stelle der Karosserie befestigt sein. Beim Schwingungstilger ist es vorgesehen, daß die Eigenfrequenz des Schwingungssystems, das aus der Trägheitsmasse und dem Federelement gebildet ist, höchstens so groß ist, wie die Frequenz der hin- und hergehenden Bewegung. Die Trägheitsmasse kann durch eine an der Tragplatte relativ unbeweglich festgelegten Tauchspule bewegbar sein. Das Federelement ist durch die Tauchspule verformbar und die Trägheitsmasse kann durch einen Topfmagnet gebildet sein. Dieser Topfmagnet umschließt die Tauchspule radial innen und außen zumindest teilweise konzentrisch und ist durch eine Führung parallel zur Achse der Tauchspule geführt. Hierbei ist von Vorteil, daß bei Einleitung von Schwingungen durch die parallele Führung der relativ zueinander beweglichen Teile und einem Luftspalt der von einem Magnetfeld durchsetzt ist, der sich im wesentlichen parallel zur Bewegungsrichtung erstreckt, eine stets gleichbleibende Spaltbreite erhalten bleibt und der Schwingungstilger dadurch ein lineares Betriebsverhalten aufweist. Das Magnetfeld im Luftspalt verläuft radial und erzeugt damit keine statische Vorspannung auf das Federelement in Richtung der vorgesehenen Bewegungsrichtung. Dadurch, daß das Federelement durch die statische Magnetkraft nicht statisch belastet ist, kommt es auch bei zunehmender Gebrauchsdauer nicht zu einer bleibenden Setzung des Federmaterials. Der Schwingungstilger ermöglicht die eingeleiteten Schwingungen aktiv zu reduzieren. Er kann auch gezielt zu Schwingungen angeregt werden, um die Schwingungen im angrenzenden Maschinenteil hinsichtlich ihrer Frequenz und Schwingungsstärke in gewünschter Weise zu verändern. Der Schwingungstilger mit Trägheitsmasse und Feder kann in einem zum Auflager separaten Gehäuse untergebracht sein. Dieses Gehäuse kann dabei an der von dem Auflager abgewandten Seite des Maschinenteils befestigt sein. Bei Einleitung eines Wechselstroms in die Tauchspule wird eine Kraft zwischen dem Topfmagnet und der am Maschinenteil festgelegten Tragplatte erzeugt, die sich einerseits an der Trägheitsmasse und andererseits an dem Maschinenteil abstützt. Bei einer derartigen Ausgestaltung ist von hervor zuhebender Bedeutung, daß die Tauchspule durch keine separat angebrachte Halterung an dem Maschinenteil befestigt werden muß. Um gute Gebrauchseigenschaften während einer langen Gebrauchsdauer zu erreichen und den aktiven, ansteuerbaren Schwingungstilger in verschiedenen Einbaulagen einsetzen zu können, ist zwischen der Tragplatte, die den Tauchspulenträger bildet und dem Topfmagnet eine elastische Aufhängung in Form des Federelements vorgesehen, die den Topfmagnet in einer definierten räumliche Nullage hält. Die Führung für den Topfmagnet in bezug auf die Tauchspule erfolgt so, daß auch bei Einwirkung von Querkräften auf den Topfmagnet keine unzulässige Reibung oder Krafteinwirkung zwischen dem Magnet und der Spule auftritt. Der Größe der Trägheitsmasse des Schwingungstilgers kann in einem Verhältnis zur Größe des schwingenden Bauteils von 1/100 bis 1/1000 ausgedrückt werden.

Die Konstruktion der erfindungsgemäß vorgeschlagenen Lagerung geht somit davon aus, daß neben niederfrequenten Schwingungen in der Regel ein großes Spektrum hochfrequenter Störschwingungen zusätzlich aufgenommen und kompensiert werden kann. Niederfrequente Schwingungen werden in einem Kraftfahrzeug vor allem beim Überfahren von Bodenwellen oder beim Anlassen des Motors eingeleitet, da eine erhebliche Beeinträchtigung des Fahrkomforts vermieden werden soll, was sich in Vibration der Karosserie als auch durch Geräusche im Innenraum des Fahrzeuges auswirken.

Hochfrequente Schwingungen, die im Bereich zwischen 500 und 1000 Hz eines Kraftfahrzeuges liegen entstehen infolge des in der Praxis nur unvollkommen erzielbaren Massenausgleichs der bewegten Motorteile, sowie von Eigenfrequenzen der motorbefestigten Zusatzaggregate, der Antriebseinheit selbst sowie Baugruppen wie beispielsweise der Räder. Diese Schwingungen haben nur eine relativ kleine Amplitude, können sich aber als Dröhnschwingung während der Fahrt recht störend bemerkbar machen. Die Isolierung der oben genannten Schwingung durch Kompensation wird deshalb angestrebt. Diese Kompensation der Schwingung ist nicht nur an einer Eingangsgröße gekoppelt, sondern wird in Abhängigkeit von einer oder mehreren Eingangsgrößen und/oder Betriebszu ständen empirisch festgelegt, wobei sich je nach Fahrzeugtyp unterschiedliche Einstellungen ergeben können. Die tatsächlich auftretenden Störschwingungen lassen sich durch die erfindungsgemäße Lagerung in einer noch nicht erreichten Weise beseitigen. Eine Anpassung des Kompensationsverhaltens an unterschiedliche Kraftfahrzeugtypen und Drehzahlen ist dadurch leicht möglich, so daß eine optimale, unter allen denkbaren Betriebsbedingungen erzielte Wirksamkeit gewährleistet ist. Der Schwingungstilger kann über einen Prozessrechner steuerbar sein, wobei der Prozessrechner anwendungsspezifisch frei programmierbar ist. Der Zusammenhang kann bei der Programmierung zwischen der Regelgröße, einem Referenzsignal und weiteren Motor- und/oder bauteilbezogenen Eingangsgrößen bestehen. Diese zusätzlich zum Referenzsignal bezogenen Eingangsgrößen können beispielsweise ein eingelegter Gang, die Drosselklappenstellung, Unterdruck im Ansaugrohr, vom Motor abgenommenes Drehmoment, sowie die Einfederung des Motorlagers sein. In dem Prozessrechner wird zur Steuerung des Schwingungstilger kontinuierlich ein Referenzsignal eingegeben, dem sich bestimmte Störschwingungen in einer besonders repräsentativen Weise zuordnen lassen. Das Referenzsignal sowie die anderen Eingangsgrößen werden in dem Prozessrechner durch Phasenverschiebung und/oder Frequenzvervielfältigung, und/oder Amplitudenvervielfältigung so modifiziert, daß sich eine optimale Kompensation der Störschwingungen ergibt. Diese werden dadurch in ausgezeichneter Weise isoliert. Die erfindungsgemäße Lagerung wird nachfolgend anhand eines Ausführungsbeispiels unter Zuhilfenahme der beigefügten Zeichnungen näher erläutert.

Es zeigen:
- Fig. 1: erfindungsgemäße Lagerung im Zusammenwirken
- Fig. 2: aktiver Tilger im Schnitt
- Fig. 3: Steuerung des aktiven Tilgers

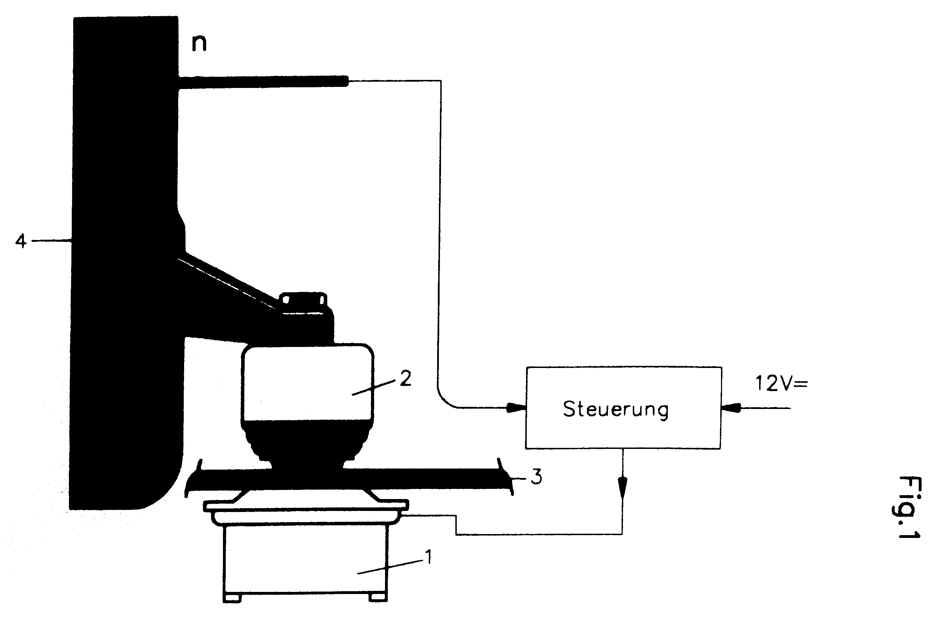

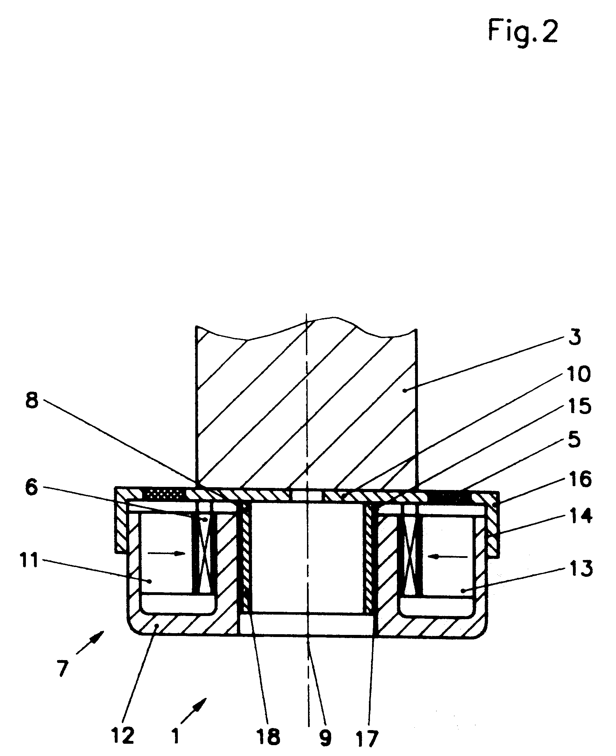

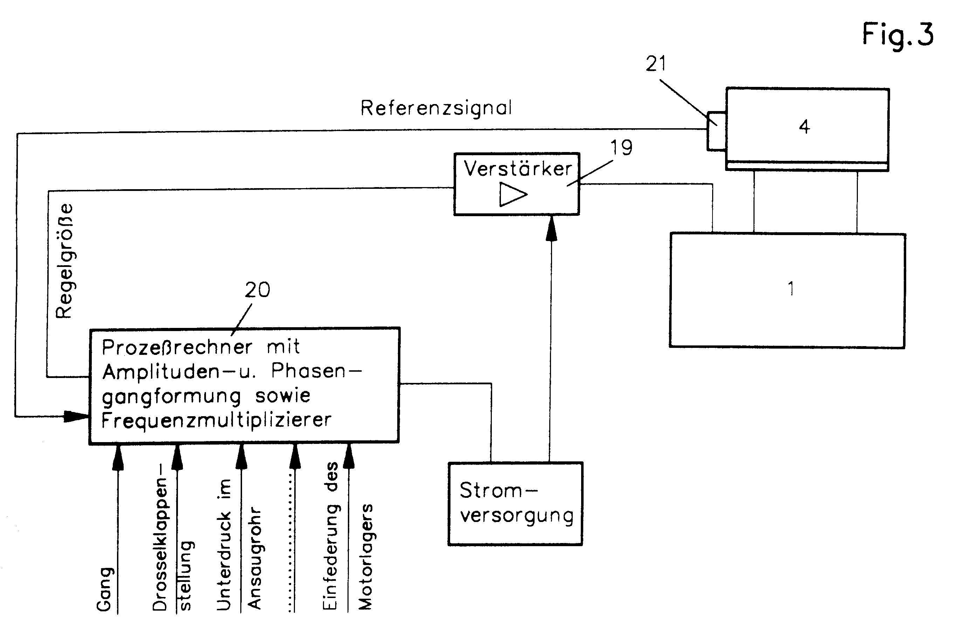

In Fig. 1 ist die erfindungsgemäße Lagerung im Zusammenwirken mit einer Steuerschaltung gezeigt. Die Fig. 2 und 3 beschreiben den Aufbau eines aktiven Schwingungstilgers wie er bei dieser Ausführung zur Anwendung kommt sowie die Steuerschaltung des aktiven Tilger.

Die Lagerung für ein schwingendes Bauteil 4 umfaßt ein Auflager 2, welches auf einem Maschinenteil 3, beispielsweise der Karosserie, abgestützt ist. Das Auflager 2 ist durch eine Feder mit der Trägheitsmasse 7 eines Schwingungstilgers 1 gekoppelt. Dabei ist die Trägheitsmasse 7 und einem Federelement 5 nicht durch eine Flüssigkeit berührt. Das Auflager 2 kann aus einem einfach aufgebauten Gummi- und/oder Metallager bestehen. Die Kopplung des Auflagers 2 mit dem Schwingungstilger 1 dient zur Störschwingungskompensation aller auftretenden Störschwingungen für jedes schwingende Bauteil 4. Schwingende Bauteile sind beispielsweise der Motor, das Getriebe, der Klimakompressor, die Lichtmaschine oder auch Baugruppen wie die Räder eines Fahrzeuges.

In Fig. 3 ist das schwingende Bauteil 4 und eine daran befestigter Signalgeber 21, der vorzugsweise die Motordrehzahl mißt, schematisch dargestellt. In dem freiprogrammierbaren Prozessrechner 20 werden neben dem Referenzsignal vom Signalgeber 21 weitere Eingangsgrößen, wie beispielsweise eingelegter Gang, die Drosselklappenstellung, der Unterdruck im Ansaugrohr, das Motormoment oder die Einfederung des Motorlagers unter anderem mit eingespeist. Die Eingangsgrößen werden in dem Prozessrechner 20, der sich in der Steuereinheit befindet, entsprechend einem bestimmten Programm verarbeitet und in die entsprechende Phasenlage zum Referenzsignal gebracht. Zusätzlich können der Amplitudengang und die Frequenz des Referenzsignals verändert werden. Das so aufbereitete Signal gelangt über einen Leistungsverstärker 19 zum Schwingungstilger 1. In Fig. 2 ist ein zur Anwendung kommender aktiver Schwingungstilger gezeigt, der an einem hin- und herbewegbaren Maschinenteil 3 befestigt ist. Der Schwingungstilger 1 umfaßt eine Tragplatte 10, die mit dem Maschinenteil 3 verbunden ist. In der hier dargestellten Ausführung sind das Maschinenteil 3 und die Tragplatte 10 miteinander verschraubt. Die Trägheits masse des Schwingungstilgers 1 ist durch ein Topfmagnet gebildet, wobei der Topfmagnet einen Magnet 11 und ein Magnetgehäuse 12 umfaßt. Die Trägheitsmasse 7 ist durch eine Veränderung der Masse des Magnetgehäuses 12 variierbar. Dadurch und die ebenfalls variable Gestalt der Federelement 5 kann die Eigenfrequenz des Schwingungstilgers 1 auf einen gewünschten Wert festgelegt werden. Der Topfmagnet umschließt eine Tauchspule 6 radial innen- und außenseitig, wobei die Tauchspule 6 relativ unbeweglich an der Tragplatte 10 befestigt ist. Die Tauchspule 6 ist jeweils mit einem hier nicht dargestellten Anschluß versehen und durch eine Versorgungseinheit mit Wechselstrom beaufschlagbar. Die Tauchspule 6 ist parallel zur Bewegung des Maschinenteils 3 angeordnet, wobei der Topfmagnet durch ein Federelement 5 an der Tragplatte 10 schwingfähig festgelegt ist. Durch die Ansteuerung der Tauchspule 6 können die in das Maschinenteil 3 eingeleiteten Schwingungen reduziert oder durch Einleitung einer Gegenschwingung getilgt werden. In Abhängigkeit von der Schwingung des Maschinenteils 3 wird ein Wechselstrom in die Tauchspule 6 eingeleitet, so daß eine Kraft zwischen Topfmagnet und der Tragplatte 10 entsteht, die sich in axialer Richtung an die einander benachbarten, schwingfähig zueinander aufgehängten Teilen abstützt. Das Magnetgehäuse 12 ist im Bereich seines Außenumfangs durch eine Pressung 14 mit dem Randbereich 16 der Tragplatte 10 verbunden, wobei die Tragplatte 10 und der Randbereich 16 durch das Federelement 5 aus elastomerem Werkstoff miteinander verbunden sind. Geführt wird der Topfmagnet im Bereich seines Außenumfangs durch einen axialen Vorsprung 18 der rohrförmig ausgebildet und relativ unbeweglich an der Tragplatte 10 befestigt ist. Der Vorsprung 18 ist im Bereich seines Außenumfangs mit einer reibungsverringernden Oberflächenbeschichtung 17 versehen, die das Ansprechverhalten des Tilgers 1 bei Einleitung von Wechselstrom verbessert. Das die Störschwingungen erzeugende schwingende Bauteil 4 ist mit dem Schwingungstilger 1 verbunden. Der mit dem schwingenden Bauteil 4 verbundene Signalgeber 21 liefert ein elektrisches Signal, welches in einer Phasenbeziehung zu den durch die Massenkraft hervorgerufene Störschwingungen steht. D.h., eine Verschiebung des Bauteils 4 nach unten erzeugt z.B. ein positives elektrisches Signal am Signalgeber 21. Dieses Signal wird in dem Prozessrechner 20 entsprechend der Drehzahl und den übrigen Eingangsgrößen so aufbereitet und an den Schwingungstilger 1 weitergeleitet, daß der Schwingungstilger 1 genau entgegensetzt der Bauteilbewegung, also in diesem Fall nach oben bewegt wird. Somit wird eine völlige Kompensation der Störschwingungen ermöglicht. Sämtliche anderen Störschwingungen werden entsprechend angeregt und stehen deshalb in genau definierten drehzahlabhängigen Phasenbeziehungen. Diese Beziehungen sind in dem Prozessrechner 20 programmiert und werden entsprechend dem anliegenden Referenzsignal und den Eingangsgrößen aufgerufen.

## Patentansprüche

1. Lagerung für ein schwingendes Bauteil, umfassend ein auf einem Maschinenteil (3) abgestütztes Auflager (2), ein durch einen Federkörper auf dem Auflager abgestütztes Traglager und eine durch einen Antrieb parallel zur Richtung der betriebsbedingt eingeleiteten Schwingungen hin- und herbewegbare Trägheitsmasse (7), die federnd gelagert und, bezogen auf die erregende Schwingung, gegensinnig bewegbar ist, wobei die Trägheitsmasse (7) durch eine Feder (5) mit dem Auflager (2) verbunden ist, dadurch gekennzeichnet, daß die Trägheitsmasse (7) und die Feder (5) nicht durch eine Flüssigkeit berührt sind.

2. Lagerung nach Anspruch 1, dadurch gekennzeichnet, daß das Verhältnis aus der jeweiligen Größe der Trägheitsmasse (7) und des schwingenden Bauteils (4) 1/100 bis 1/1000beträgt.

3. Lagerung nach Anspruch 1 bis 2, dadurch gekennzeichnet, daß die Trägheitsmasse (7) und die Feder (5) in einem separaten Gehäuse (12) aufgenommen sind.

4. Lagerung nach Anspruch 3, dadurch gekennzeichnet, daß das Gehäuse (12) an der von dem Auflager (2) abgewandten Seite des Maschinenteils (3) befestigt ist.
